# EUROPEAN PATENT SPECIFICATION

(11) **EP 2 623 378 B1**
(45) Date of publication and mention of the grant of the patent: **29.07.2015**
(21) Application number: 13153626.0
(22) Date of filing: 01.02.2013
(51) Int. Cl.: B60R 25/045, B60R 25/20, B60R 25/24

(54) **Plug-in vehicle security system with a wireless relay**
Plug-in-Fahrzeugsicherheitssystem mit drahtlosem Relais
Système de sécurité de véhicule enfichable avec un relais sans fil

(30) Priority: 03.02.2012 US 201213365700
(43) Date of publication of application: 07.08.2013
(73) Proprietor: Delphi Technologies, Inc., Troy, MI 48007 (US)
(72) Inventor: Tieman, Craig A., Westfield, IN Indiana 46074 (US)
(74) Representative: Neill, Andrew Peter

(56) References cited:
- EP-A2- 1 067 028
- WO-A1-2007/020637
- US-A- 5 703 414
- US-A- 6 144 294
- US-A1- 2005 212 668
- US-B1- 6 664 888
- US-B2- 7 132 762

## Description

### TECHNICAL FIELD

This disclosure generally relates to a plug-in vehicle security system, and more particularly relates to a plug-in telematics device that communicates with a wireless communication network and a plug-in wireless relay module equipped with a wireless receiver that operates the relay according to an authorization signal received from the telematics device.

### BACKGROUND OF INVENTION

Vehicle fleet owners that rent vehicles to the general public, or have vehicles shared among multiple authorized drivers (e.g. - employees), have various mechanisms to allow only authorized drivers to gain access to the vehicles and drive them. Installation of these systems generally requires some type of vehicle wiring harness modification (e.g. cutting and splicing of wires) to install electronic devices that prevent unauthorized starting and/or unauthorized operating of a vehicle. Additionally, companies offering aftermarket anti-theft systems may also have remote vehicle disable features to shutdown vehicles, and these systems are also installed by modifying the vehicle wiring harness. Having to modify the vehicle harness to install such security systems is particularly undesirable for vehicle rental fleet operators as such installations require highly skilled personal and tend to take an undesirable amount of time to complete. Furthermore, when the security systems are removed when a vehicle is removed from the fleet, the previous modifications to the wiring harness may compromise the environmental integrity or long-term reliability of the wiring harness potentially leading to electrical problems long after the rental vehicle is sold.

### SUMMARY OF THE INVENTION

A plug-in vehicle security system is provided according to claim 1.

Further features and advantages will appear more clearly on a reading of the following detailed description of the preferred embodiment, which is given by way of non-limiting example only and with reference to the accompanying drawings.

### BRIEF DESCRIPTION OF THE DRAWINGS

The present invention will now be described, by way of example with reference to the accompanying drawings, in which:
Fig. 1 is diagram of a vehicle security system in accordance with one embodiment;
Fig. 2 is a perspective view of a relay module use in the system of Fig. 1 in accordance with one embodiment;
Fig. 3 is a perspective view of a relay module use in the system of Fig. 1 in accordance with one embodiment;
Fig. 4 is a perspective view of a telematics device use in the system of Fig. 1 in accordance with one embodiment;
Fig. 5 is flowchart of a routine executed by the system of Fig. 1 in accordance with one embodiment; and
Fig. 6 is flowchart of a routine executed by the system of Fig. 1 in accordance with one embodiment.

### DESCRIPTION OF THE PREFERRED EMBODIMENT

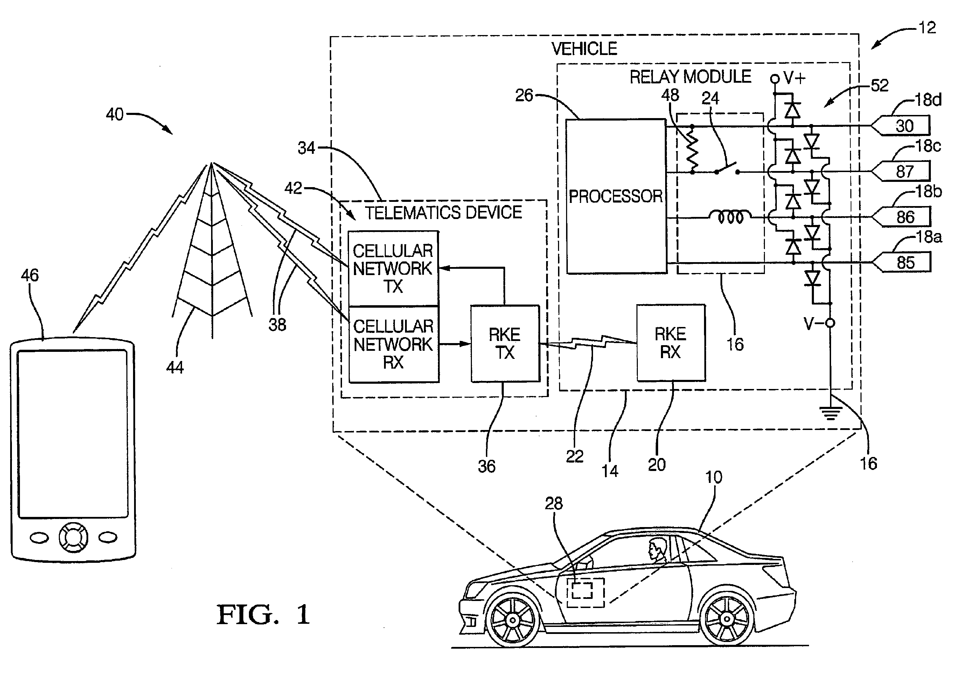

Fig. 1 illustrates a non-limiting example of a vehicle 10 (e.g. an automobile), equipped with a plug-in vehicle security system 12, hereafter often referred to as the system 12. As will become apparent in the description that follows, the system 12 described herein can be installed into the vehicle 10 without cutting or splicing wires of the vehicle wiring harness (not shown) in the vehicle 10 that the system 12 is installed. Such a plug-in vehicle security system will be particularly attractive to vehicle fleet operators, such as vehicle rental fleets, where new vehicles are regularly added to the fleet, and so a vehicle security system must be installed in each new vehicle. Also, when a vehicle is removed from the fleet and sold, the vehicle security system must be removed. By providing a vehicle security system that can be simply plugged into and unplugged from a vehicle, time and installer expertise needed to install the system 12 is reduced, and so fleet operating costs are reduced.

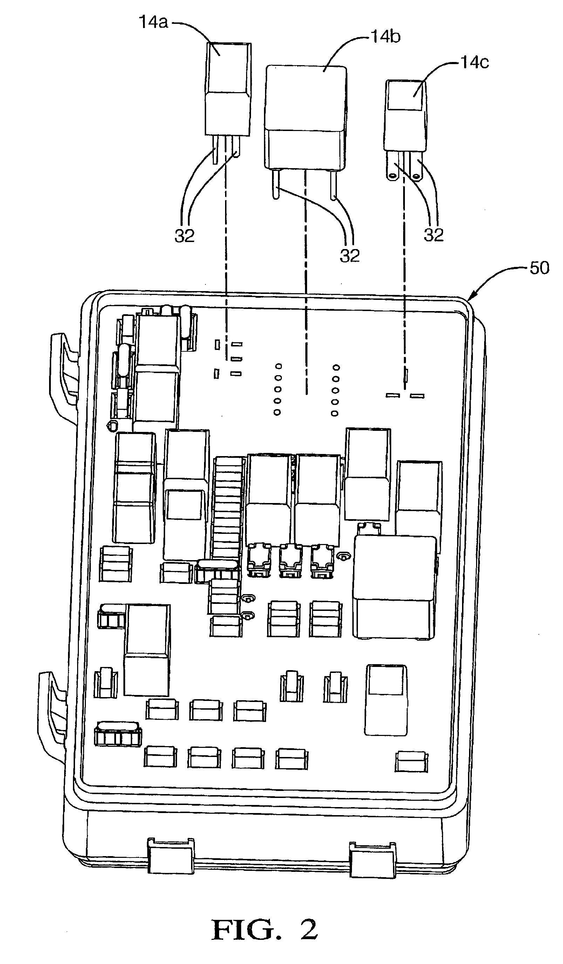

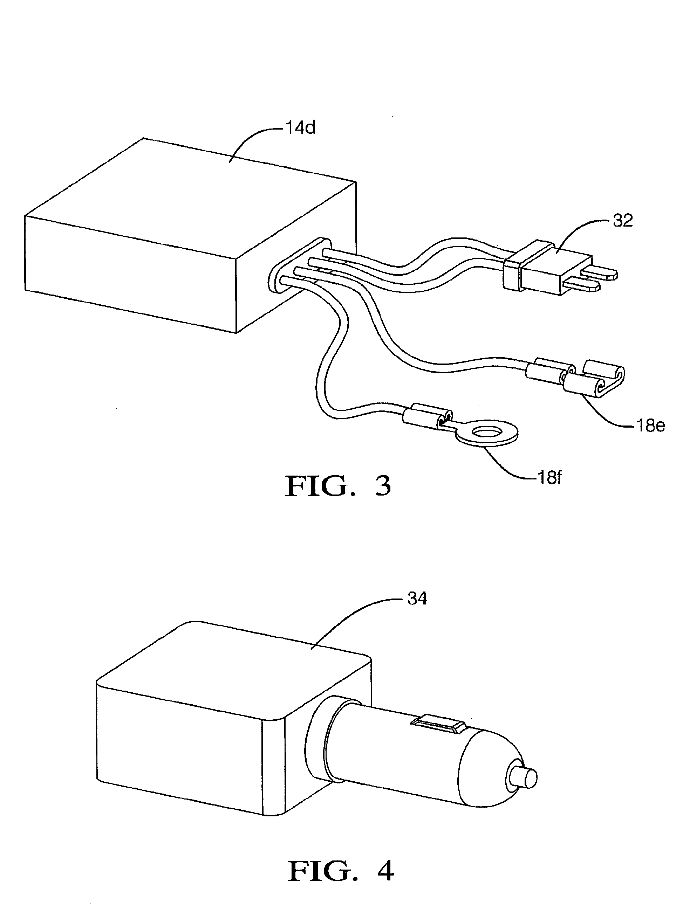

The system 12 includes a wirelessly operated relay module 14 configured for plug-in installation into the vehicle 10. Figs. 2 and 3 illustrate non-limiting examples of the relay module 14, and these figures will be described in more detail below. The relay module 14 includes a relay switch 16. In general, the relay switch 16 is operable to an open-state and a closed-state by, for example, but not limited to, applying a suitable electrical signal to solenoid connections 18a and 18b. It is noted that solenoid connections 18a and 18b generally correspond to International Organization for Standardization (ISO) relay connection terminals 85 and 86.

The relay module 14 also includes a wireless receiver 20 coupled to the relay switch 16 in a manner effective to influence operation of the relay switch 16 based on reception of an authorization signal 22. The authorization signal is preferably communicated wirelessly, for example by a radio frequency (RF) signal having a carrier frequency of 315 Mega-Hertz (MHz) or 433 MHz which are typically used by vehicle remote keyless entry (RKE) transmitters/receivers. Alternatively, the authorization signal may use other wireless communication protocols such as DASH7®, BLUETOOTH®, or ZIGBEE®.

The wireless receiver 20 is coupled to the relay switch 16 so that a signal applied to the solenoid connections 18a and 18b is blocked or otherwise prevented from actuating a switch 24 of the relay switch 16. Alternatively, a signal suitable to operate the relay switch 16 may be provided by a processor 26 either operating in cooperation with a signal applied to the solenoid connections 18a and 18b, or independent of a signal applied to the solenoid connections 18a and 18b as will be known to those skilled in the art.

The relay module 14 includes switch connections 18c and 18d that correspond to ISO relay connection terminals 30 and 87. In this example, when the switch 24 is closed, current is able to flow between switch connections 18c and 18d. While the example shown illustrates a single pole single throw type switch, it is contemplated that other configurations are possible, for example, an additional switch connection corresponding to ISO relay connection terminal 87a so the relay module 14 could be used for both normally-open and normally-closed applications.

The processor 26 includes devices such as a microprocessor or other control circuitry as should be evident to those in the art. The processor 26 may include memory (not shown), including non-volatile memory, such as electrically erasable programmable read-only memory (EEPROM) for storing one or more routines, thresholds and captured data. The one or more routines may be executed by the processor 26 to perform steps for operating the relay module 14 as described herein. Electrical power for operating the processor 26 and other electrical devices within the relay module 14 may be drawn from the solenoid connections 18a and 18b and/or switch connections 18c and 18d using diode network 52 to provide voltages V+ and V-, or other known polarity corrections techniques such as those described in United States Patent Number 7,132,762 to Metlitzky et al., issued November 7, 2006. It is recognized that in some vehicle electrical system configurations that an alternative ground connection 54 may be necessary to provide electrical power to the relay module 14, and so a flying lead to a vehicle chassis ground may be necessary.

Fig. 2 illustrates several non-limiting examples of relay modules 14a, 14b, and 14c suitable for installation into an exemplary vehicle power distribution center 50 that is commonly found under-hood in the vehicle engine compartment. The relay modules 14a, 14b, and 14c preferably include plug-in terminals sized and arranged to correspond to a plug-in type automotive relay that the relay modules 14a, 14b, and 14c are to replace. Devices similar to relay modules 14a, 14b, and 14c are available from Master Lock Corporation and are marketed as - MASTER LOCK STARTER SENTRY®. The relay modules may be used to replace any relay in the vehicle 10 suitable for limiting operation of the vehicle 10. Suitable relays for replacement include, but are not limited to, a starter motor relay, a fuel pump relay, an ignition system relay, an electronic transmission relay, and the like. By controlling the operation of relays such as these, the vehicle 10 may be disabled so it cannot be driven by an unauthorized operator.

Fig. 3 illustrates an alternative configuration of a relay module 14d that includes a connector 32 configured to correspond to a plug-in type automotive fuse sometimes referred to as a blade type fuse. It is appreciated that other types of fuses are used in vehicles and it is contemplated that a suitable connector for these other types of fuses will be apparent to those skilled in the art. Preferable, the connector 32 itself does not include a fuse element, but a fuse element (not shown) and a switch (not shown, but similar to switch 24 in Fig. 1) are located within the relay module 14d and are connected in series so that the relay module 14d can be used to prevent or allow current to flow through the fuse element. The relay module 14d may also include power connectors 18e and 18f such as a push-on terminal type connector (18e) for making a plug-in type connection to a typical automotive fuse box 28 (details not shown) or a ring-terminal type connector (18f) for making a chassis ground connection in the vehicle 10. It is recognized that the flying leads to the various connectors shown in Fig. 3 could be adapted to make electrical connections between the relay modules 14a, 14b, and 14c shown in Fig. 2 to a typical automotive fuse box and so those relay modules could be used in both direct plug-in applications or adapted to other applications.

Referring again to Fig. 1, the system 12 also includes a telematics device 34 configured for plug-in installation into a vehicle 10. Fig. 4 illustrates a non-limiting example of the telematics device 34 configured for plug-in installation into an automotive 12 Volt accessory plug, a configuration commonly referred to as a cigarette lighter adapter. Alternatively, the telematics device may be packaged in a manner similar to that shown in Fig. 3 so the telematics module 34 can be quickly installed into the vehicle 10 without modifying the wiring harness of the vehicle 10. Also, the telematics device 34 may be configured to be connected to any other vehicle diagnostic connector in the vehicle such as an On-Board Diagnostics II (OBDII) connector, or an Assembly Line Diagnostic Link (ALDL) connector present in some General Motors automobiles. A telematics device configured to plug into a diagnostic connector may be preferable in some instances because the diagnostic connector is often at least partially out of site, and often provides a direct connection to the vehicles internal communication network.

The telematics device 34 may include a wireless transmitter 36 configured to transmit the authorization signal 22 in response to a network signal 38. The network signal 38 may be from a cellular phone network as suggested by Fig. 1, or may be by way of, a WI-FI® network. As such, the telematics device 34 may include a network transceiver 42 configured to receive the network signal 38 from a communication network 44 illustrated in this non-limiting example as a cellular phone tower.

By equipping the system 12 with the network transceiver 42, the authorization signal 22 may be transmitted by the wireless transmitter 36 in response to, for example, a personal communication device 46 such as a smart phone, tablet, or personal computer sending a message via the cellular phone network 40 to the network transceiver 42.

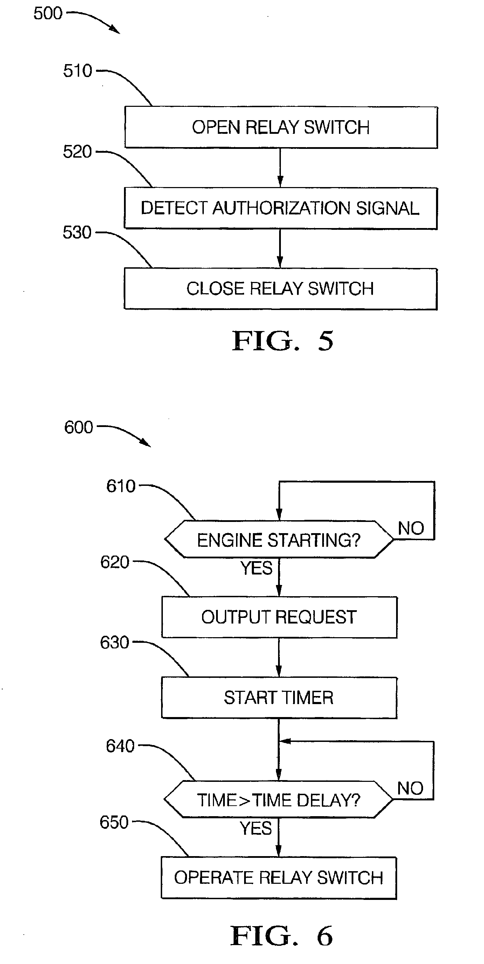

Fig. 5 illustrates a non-limiting example of a routine or flowchart 500 showing steps for operating the relay module 14. Step 510, OPEN RELAY SWITCH, may be a default condition when no power is available to the relay module 14, or may be the result of a command signal from the telematics device 34. For example, the processor 26 may be configured to open-circuit the signal path or current path between the solenoid connections 18a and 18b. Preferably, the switch 24 will remain open until so additional action occurs. Step 520, DETECT AUTHORIZATION SIGNAL, may include the wireless receiver 20 detecting or receiving the authorization signal 22 from the wireless transmitter 36. In response to the authorization signal 22 being received, step 530, CLOSE RELAY SWITCH, may include operating the processor 26 to close-circuit the signal path or current path between the solenoid connections 18a and 18b so the switch 24 can be operated by applying a suitable signal to the solenoid connections 18a and 18b.

Fig. 6 illustrates a non-limiting example of a routine or flowchart 600 showing steps for operating the relay module 14. Step 610, ENGINE STARTING?, may include configuring the processor 26 to determine if the switch 24 or relay module 14 is being operated or used in a manner indicative of an attempt to start an engine (not shown) of the vehicle 10. For example, the processor 26 may monitor voltage levels on the solenoid connections 18a, 18b, 18c, and 18d, and determine that an attempt to start the engine has occurred or is indicated if voltage values at one or more of the connections18a, 18b, 18c, and 18d changes by an amount greater than some predetermined voltage threshold, for example greater than 5 Volts (5V).

The relay module 14 is configured so one or more currents through the relay module 14 are monitored. For example, the relay module 14 may include a current sense resistor 48, and the processor 26 may be connected to the current sense resistor 48 so the processor 26 is able to determine if current through the switch 24 is greater than a current threshold, for example greater than one Ampere (1A). If the current through the relay switch and the current sense resistor 48 is greater than the current threshold, that condition may be indicative of an attempt to start an engine of the vehicle. Alternatively, the relay module 14 may be equipped with a current sensor, for example a Hall effect sensor, the operation of which is well known in the art.

By way of a further non-limiting example, if the relay module 14 replaces a fuel pump relay in the vehicle 10, and the current through the current sense resistor 48 corresponds to the amount of current consumed or drawn by the fuel pump (not shown), then that may be an indication that the engine is being started or is running. If the switch 24 in this example is opened by, for example, open-circuiting the signal path between the solenoid connections 18a and 18b, then the vehicle 10 is disabled because no fuel is being pumped to the engine. If there is no evidence of the engine being started (e.g. [ENGINE STARTING?] = NO), the step 610 may be repeated until engine starting is detected. If engine starting is detected (e.g. [ENGINE STARTING?] = YES), then the flowchart 600 proceeds to step 620 or 630 as will be explained below.

Step 620, OUTPUT REQUEST, is an optional step that may be initiated by the processor if an attempt to start the engine is detected, and may include equipping the wireless receiver 20 with a transmitter, equipping the wireless transmitter with a receiver, and transmitting or outputting an authorization request (same signal path indicated by authorization signal 22) in response to determining that the switch 24 is being operated in a manner indicative of an attempt to start the engine. Detecting an attempt to start the engine may be by way of measuring voltages or currents in the relay module as described above.

Step 630, START TIMER, may include equipping or configuring the processor to determine or measure a period of time after an attempt to start the engine, and possible recall from memory a predetermined time delay value.

Step 640, TIME > TIME DELAY?, may include configuring the processor 26 to determine if the period of time is less than or greater than the predetermined time delay, for example one second (1s). If time has not expired (e.g. [TIME > TIME DELAY?] = NO), then step 640 is repeated. If time has expired (e.g. [TIME > TIME DELAY?] = YES), then the flowchart 600 proceeds to step 650.

Step 650, OPERATE RELAY SWITCH, may include operating the switch 24 in a manner effective to inhibit vehicle operation if either a) the authorization signal 22 is not received following the authorization request or b) the authorization signal 22 is not received in a time period less than the time delay. Operating the switch 24 may include blocking current from a signal applied to the solenoid connections 18a and 18b, or configuring the processor 26 to directly operate the switch 24 to an open state or closed state base on instructions or programming steps stored in the processor 26.

Accordingly, a plug-in vehicle security system 12 is provided. A key advantage of the system 12 describe herein is that the system 12 can be installed into the vehicle 10 quickly and without significant expertise because the relay module 14 and the telematics device 34 are configured to be plugged into features commonly found on most vehicles such as relay sockets or fuse receptacles. Furthermore, the wireless interconnection of the relay module 14 and the telematics device 34 makes the system easy to install and makes a way to defeat the system less apparent to a would-be thief.

While this invention has been described in terms of the preferred embodiments thereof, it is not intended to be so limited, but rather only to the extent set forth in the claims that follow.

## Claims

1. A plug-in vehicle security system (12) comprising:
a relay module (14) configured for plug-in installation into a vehicle (10), said relay module (14) comprising a relay switch (16) operable to an open-state and a closed-state, and a wireless receiver (20) coupled to the relay switch (16) in a manner effective to influence operation of the relay switch (16) based on reception of an authorization signal (22);
a telematics device (34) configured for plug-in installation into a vehicle (10), said telematics device (34) comprising a wireless transmitter (36) configured to transmit the authorization signal (22) in response to a network signal (38), said telematics device (34) further comprising a network transceiver (42) configured to receive the network signal (38) from a communication network (44), and
a processor (26) configured to determine if current through the relay switch (16) is greater than a current threshold, wherein current greater than the current threshold is indicative of an attempt to start an engine of the vehicle (10).

2. The system (12) in accordance with claim 1, wherein the communication network (44) is one of a cellular phone network (40) and a WI-FI® network.

3. The system (12) in accordance with claim 1 or 2, wherein the relay module (14) includes plug-in terminals configured to correspond to a plug-in type automotive relay.

4. The system (12) in accordance with anyone of claims 1 to 3, wherein the relay module (14) includes a connector (32) configured to correspond to an automotive fuse.

5. The system (12) in accordance with anyone of claims 1 to 4, wherein the relay module (14) is configured so the relay switch (16) is operated to the open-state until an authorization signal (22) is received by the wireless receiver (20).

6. The system (12) in accordance with anyone of claims 1 to 5, wherein the relay module (14) further comprises a processor (26) configured to determine if the relay switch (16) is being operated in a manner indicative of an attempt to start an engine of the vehicle (10).

7. The system (12) in accordance with claim 6, wherein the processor (26) is further configured to determine a time delay in response to determining that the relay switch (16) is being operated in a manner indicative of an attempt to start an engine, and operate the relay switch (16) in a manner effective to inhibit vehicle (10) operation if an authorization signal (22) is not received in a time period less than the time delay.

8. The system (12) in accordance with claim 6 or 7, wherein the processor (26) is further configured to output an authorization request in response to determining that the relay switch (16) is being operated in a manner indicative of an attempt to start an engine, and operate the relay switch (16) in a manner effective to inhibit vehicle (10) operation if an authorization signal (22) is not received following the authorization request.

9. The system (12) in accordance with claim 1, wherein the processor (26) is further configured to determine a time delay in response to determining current greater than the threshold, and operate the relay switch (16) in a manner effective to inhibit vehicle (10) operation if an authorization signal (22) is not received in a time period less than the time delay.

10. The system (12) in accordance with claim 1 or 9, wherein the processor (26) is further configured to output an authorization request in response to determining current greater than the current threshold, and operate the relay switch (16) in a manner effective to inhibit vehicle (10) operation if an authorization signal (22) is not received following the authorization request.

## Patentansprüche

1. Plug-in-Fahrzeugsicherheitsystem (12), umfassend:
ein Relaismodul (14), das zur Steckmontage in einem Fahrzeug (10) konfiguriert ist, wobei das genannte Relaismodul (14) einen Relaisschalter (16), der auf einen offenen Zustand und einen geschlossenen Zustand betätigt werden kann, und einen drahtlosen Empfänger (20) aufweist, der mit dem Relaisschalter (16) auf eine Weise gekoppelt ist, die zur Beeinflussung der Betätigung des Relaisschalters (16) auf Basis eines Empfangs eines Berechtigungssignals (22) wirksam ist,
eine Telematikvorrichtung (34), die zur Steckmontage in einem Fahrzeug (10) konfiguriert ist, wobei die genannte Telematikvorrichtung (34) einen drahtlosen Sender (36) aufweist, der zum Senden des Berechtigungssignals (22) als Reaktion auf ein Netzwerksignal (38) konfiguriert ist, wobei die genannte Telematikvorrichtung (34) ferner einen Netzwerk-Transceiver (42) aufweist, der zum Empfangen des Netzwerksignals (38) von einem Kommunikationsnetzwerk (44) konfiguriert ist, und
einen Prozessor (26), der zur Ermittlung konfiguriert ist, ob Strom durch den Relaisschalter (16) größer als eine Stromschwelle ist, wobei Strom, der größer als die Stromschwelle ist, einen Versuch zum Starten eines Motors des Fahrzeugs (10) erkennen lässt.

2. System (12) nach Anspruch 1, wobei das Kommunikationsnetzwerk (44) ein zellulares Telefonnetz (40) oder ein WI-FI®-Netzwerk ist.

3. System (12) nach Anspruch 1 oder Anspruch 2, wobei das Relaismodul (14) Steckanschlüsse beinhaltet, die konfiguriert sind, um einem Kraftfahrzeugrelais des Stecktyps zu entsprechen.

4. System (12) nach einem der Ansprüche 1 bis 3, wobei das Relaismodul (14) einen Verbinder (32) beinhaltet, der konfiguriert ist, um einer Kraftfahrzeugsicherung zu entsprechen.

5. System (12) nach einem der Ansprüche 1 bis 4, wobei das Relaismodul (14) konfiguriert ist, damit der Relaisschalter (16) auf den offenen Zustand betätigt wird, bis der drahtlose Empfänger (20) ein Berechtigungssignal (22) empfängt.

6. System (12) nach einem der Ansprüche 1 bis 5, wobei das Relaismodul (14) ferner einen Prozessor (26) aufweist, der zur Ermittlung konfiguriert ist, ob der Relaisschalter (16) auf eine Weise betätigt wird, die einen Versuch zum Starten eines Motors des Fahrzeugs (10) erkennen lässt.

7. System (12) nach Anspruch 6, wobei der Prozessor (26) ferner konfiguriert ist, um eine zeitliche Verzögerung als Reaktion auf die Ermittlung, dass der Relaisschalter (16) auf eine Weise betätigt wird, die einen Versuch zum Starten eines Motors erkennen lässt, zu ermitteln und den Relaisschalter (16) auf eine Weise zu betätigen, die das Sperren des Betriebs des Fahrzeugs (10) bewirkt, wenn in einer Zeitspanne, die kürzer als die zeitliche Verzögerung ist, kein Berechtigungssignal (22) empfangen wird.

8. System (12) nach Anspruch 6 oder 7, wobei der Prozessor (26) ferner konfiguriert ist, um als Reaktion auf die Ermittlung, dass der Relaisschalter (16) auf eine Weise betätigt wird, die einen Versuch zum Starten eines Motors erkennen lässt, eine Berechtigungsanforderung auszugeben und den Relaisschalter (16) auf eine Weise zu betätigen, die das Sperren des Betriebs des Fahrzeugs (10) bewirkt, wenn auf die Berechtigungsanforderung hin kein Berechtigungssignal (22) empfangen wird.

9. System (12) nach Anspruch 1, wobei der Prozessor (26) ferner konfiguriert ist, um eine zeitliche Verzögerung als Reaktion auf die Ermittlung von Strom, der größer als die Schwelle ist, zu ermitteln und den Relaisschalter (16) auf eine Weise zu betätigen, die das Sperren des Betriebs des Fahrzeugs (10) bewirkt, wenn in einer Zeitspanne, die kürzer als die zeitliche Verzögerung ist, kein Berechtigungssignal (22) empfangen wird.

10. System (12) nach Anspruch 1 oder Anspruch 9, wobei der Prozessor (26) ferner konfiguriert ist, um als Reaktion auf die Ermittlung von Strom, der größer als die Stromschwelle ist, eine Berechtigungsanforderung auszugeben und den Relaisschalter (16) auf eine Weise zu betätigen, die das Sperren des Betriebs des Fahrzeugs (10) bewirkt, wenn auf die Berechtigungsanforderung hin kein Berechtigungssignal (22) empfangen wird.

## Revendications

1. Système de sécurité embrochable pour véhicule (12) comprenant :
un module relais (14) configuré pour être installé de manière embrochable dans un véhicule (10), ledit module relais (14) comprenant un commutateur relais (16) capable de fonctionner dans un état ouvert et dans un état fermé, et un récepteur sans fil (20) couplé au commutateur relais (16) d'une manière effective pour influencer le fonctionnement du commutateur relais (16) sur la base de la réception d'un signal d'autorisation (22) ;
un dispositif télématique (34) configuré pour être installé de manière embrochable dans un véhicule (10), ledit dispositif télématique (34) comprenant un émetteur sans fil (36) configuré pour émettre le signal d'autorisation (22) en réponse à un signal de réseau (38), ledit dispositif télématique (34) comprenant en outre un émetteur/récepteur de réseau (42) configuré pour recevoir le signal de réseau (38) depuis un réseau de communication (44), et
un processeur (26) configuré pour déterminer si le courant à travers le commutateur relais (16) est plus élevé qu'un seuil de courant, de sorte qu'un courant plus élevé que le seuil de courant est une indication d'une tentative de faire démarrer un moteur du véhicule (10).

2. Système (12) selon la revendication 1, dans lequel le réseau de communication (44) est un réseau parmi un réseau téléphonique cellulaire (40) et un réseau Wi-Fi ®.

3. Système (12) selon la revendication 1 ou 2, dans lequel le module relais (14) inclut des bornes embrochables configurées pour correspondre à un relais automobile du type embrochable.

4. Système (12) selon l'une quelconque des revendications 1 à 3, dans lequel le module relais (14) inclut un connecteur (32) configuré pour correspondre à un fusible d'automobile.

5. Système (12) selon l'une quelconque des revendications 1 à 4, dans lequel le module relais (14) est configuré de telle façon que le commutateur relais (16) est actionné vers l'état ouvert jusqu'à ce qu'un signal d'autorisation (22) soit reçu par le récepteur sans fil (20).

6. Système (12) selon l'une quelconque des revendications 1 à 5, dans lequel le module relais (14) comprend en outre un processeur (26) configuré pour déterminer si le commutateur relais (16) est amené à fonctionner d'une manière indiquant une tentative de faire démarrer un moteur du véhicule (10).

7. Système (12) selon la revendication 6, dans lequel le processeur (26) est en outre configuré pour déterminer un retard temporel en réponse à la détermination que le commutateur relais (16) est actionné d'une manière qui indique une tentative de faire démarrer un moteur, et pour actionner le commutateur relais (16) d'une manière effective pour inhiber le fonctionnement du véhicule (10) si un signal d'autorisation (22) n'est pas reçu dans une période temporelle inférieure au retard temporel.

8. Système (12) selon la revendication 6 ou 7, dans lequel le processeur (26) est en outre configuré pour délivrer une requête d'autorisation en réponse à la détermination que le commutateur relais (16) est actionné d'une manière qui indique une tentative de faire démarrer un moteur, et pour actionner le commutateur relais (16) d'une manière effective pour inhiber le fonctionnement du véhicule (10) si un signal d'autorisation (22) n'est pas reçu à la suite de la requête d'autorisation.

9. Système (12) selon la revendication 1, dans lequel le processeur (26) est en outre configuré pour déterminer un retard temporel en réponse à la détermination d'un courant plus élevé que le seuil, et pour actionner le commutateur relais (16) d'une manière effective pour inhiber le fonctionnement du véhicule (10) si un signal d'autorisation (22) n'est pas reçu dans une période temporelle inférieure au retard temporel.

10. Système (12) selon la revendication 1 ou 9, dans lequel le processeur (26) est en outre configuré pour délivrer une requête d'autorisation en réponse à la détermination d'un courant plus élevé que le seuil de courant, et pour actionner le commutateur relais (16) d'une manière effective pour inhiber le fonctionnement du véhicule (10) si un signal d'autorisation (22) n'est pas reçu à la suite de la requête d'autorisation.
